# EUROPEAN PATENT SPECIFICATION

(11) **EP 1 027 618 B1**
(45) Date of publication and mention of the grant of the patent: **17.11.2004**
(21) Application number: 98941627.6
(22) Date of filing: 17.09.1998
(51) Int. Cl.: G01V 1/38

(54) **TOWING SEISMIC STREAMERS USED IN MARINE SEISMIC SURVEYING**
SCHLEPPEN VON SEISMISCHEN KABELN, DIE IN SEESEISMISCHEN UNTERSUCHUNGEN VERWENDET WERDEN
REMORQUAGE DE FLUTE SISMIQUE CONVENANT A LA PROSPECTION SISMIQUE MARINE

(30) Priority: 19.09.1997 US 60705 P; 02.09.1998 GB 9819169
(43) Date of publication of application: 16.08.2000
(73) Proprietor: SERVICES PETROLIERS SCHLUMBERGER, 75007 Paris (FR); SCHLUMBERGER HOLDINGS LIMITED, Road Town, Tortola (VG)
(72) Inventor: GJESTRUM, Einar, N-1326 Rykkin (NO); HOWLID, Martin, Stafford, TX 77477 (US); MCDANIEL, Gordon, Lane, Sugar Land, TX 77478 (US)
(74) Representative: Suckling, Andrew Michael
(86) International application number: PCT/IB1998/001435
(87) International publication number: WO 1999/015913

(56) References cited:
- US-A- 2 465 696
- US-A- 3 350 678
- US-A- 4 798 156
- US-A- 4 958 331
- US-A- 5 357 892
- DATABASE WPI23 December 1984 Derwent Publications Ltd., London, GB; AN 85164444 XP002091302 -& SU 1 132 168 A (DANILOV) , 30 December 1984

## Description

This invention relates to marine seismic surveying.

In order to perform a 3D marine seismic survey, a plurality of seismic streamers, each typically several thousand metres long and containing arrays of hydrophones and associated electronic equipment distributed along its length, are towed at about 5 knots behind a seismic survey vessel, which also tows one or more seismic sources, typically air guns. Acoustic signals produced by the seismic sources are directed down through the water into the earth beneath, where they are reflected from the various strata. The reflected signals are received by the hydrophones in the streamers, digitised and then transmitted to the seismic survey vessel, where they are recorded and at least partially processed with the ultimate aim of building up a representation of the earth strata in the area being surveyed.

The Applicant's current method of towing arrays of such streamers involves towing each streamer by means of its lead-in, ie by means of the armoured electrical or electro-optical cable that supplies control signals and electrical power to, and receives the aforementioned digitised signals from, the streamer, as described in US Patent No 4,798,156, the armoured outer sheath of the lead-in, typically made of steel wires or high strength synthetic fibres such as Kevlar, serving to bear the towing forces. Using this method, the Applicant can typically tow a 700 metre wide array of eight streamers, each 4,000 metres long.

The drag produced by such an array at the typical towing speed of 5 knots is about 40-45 tonnes, a high proportion of which is cross-line drag due to the transversely extending lead-ins rather than the in-line drag of the streamers themselves. This drag is a very significant contributory factor to the operating costs, primarily fuel costs, of the towing vessel, and therefore to the overall cost of the survey.

In order to increase the efficiency and reduce the cost of marine seismic surveys, it is desirable to use even wider arrays containing even more streamers. However, the Applicant has calculated that using its current towing technique, a 1440 metre wide array of ten streamers would produce a drag of over 70 tonnes, which is excessive, and therefore uneconomic.

It is an object of the present invention in its principal aspects to alleviate this problem.

The lead-ins, which because of their combined signal and power transmission and towing functions are rather expensive, are sometimes damaged in use, eg by shark bites or by impacts with debris. Currently, it is difficult if not almost impossible to repair a damaged lead-in, especially while at sea. It is an object of the present invention in its final aspect to provide solution to this problem.

US-A-4 798 156, on which the preambles of claims 1, 3 and 10 are based, discloses a method of performing a seismic survey in which a plurality of streamers are towed behind a survey vessel. Each streamer is towed from a separate lead-in, and each lead-in is attached to only one streamer.

US-A-4 958 331 discloses a method of performing a seismic survey in which a plurality of streamers are towed behind a survey vessel. More than one streamer is attached to a lead-in, but there is no disclosure as to how connection is made between the streamers and the lead-in.

US-2 465 696 discloses a detector streamer formed in sections. A coupling section is used to join two adjacent sections of the detector streamer to one another.

According to a first aspect of the present invention, there is provided a method of performing a marine seismic survey with an array of seismic streamers towed behind a survey vessel, characterised in that two or more of the streamers are towed from a single lead-in which comprises a load-bearing outer sheath to bear the towing forces, an electrical or electro-optical core via which control signals and electrical power are supplied to, and data signals are received from, the streamers being towed by the lead-in, and a connector device series connected in the lead-in, the connector device comprising a body member mechanically coupled between the respective portions of the load-bearing outer sheath of the lead-in on either side thereof, to transmit towing forces therebetween, and a towing attachment for mechanical connection to one of the two or more streamers.

In a preferred implementation of the invention, the array comprises 2N streamers, where N is at least 2, the streamers are substantially uniformly spaced apart and symmetrically distributed on each side of the centre line of the vessel, and at least two streamers on each side of the centre line of the vessel are towed from a respective such lead-in.

The Applicant has found that by use of selected implementations of the method of the invention, the drag produced by the aforementioned 1440 metre wide ten streamer array can be reduced from over 70 tonnes to a level in the region of 50 tonnes.

According to a second aspect of the present invention, there is provided a connector device characterised by being adapted for series connection in a lead-in to permit the lead-in to tow at least two seismic streamers, the lead-in comprising a load-bearing outer sheath, to bear the towing forces, and an electrical or electro-optical core via which control signals and electrical power are supplied to, and data signals are received from, the streamers, the connector device comprising a body member adapted to be mechanically coupled between the respective portions of the load-bearing outer sheath of the lead-in on either side of the body member, to transmit towing forces therebetween, and a towing attachment for mechanical connection to one of the two or more streamers, said towing attachment being secured to the body member.

The or each body member may advantageously comprise at least two generally tubular portions interconnected by a universal joint, the towing attachment being secured to one of the tubular body portions.

In a preferred implementation of the invention, the or each body member comprises three tubular body portions interconnected by two universal joints, the towing attachment being secured to the middle one of tubular body portions.

The or each towing attachment preferably includes clamping means for detachably clamping it to the tubular body portion to which it is secured.

Advantageously, the or each towing attachment has a towing bracket pivotally connected to it, said towing bracket being pivotal about an axis generally perpendicular to the axis of the body member.

According to a second aspect of the invention, there is provided an array of seismic streamers adapted to be towed behind a survey vessel, the array being characterised by comprising at least one lead-in which has two or more of the streamers connected to be towed thereby, and which comprises a load-bearing outer sheath to bear the towing forces, an electrical or electro-optical core via which control signals and electrical power are supplied to, and data signals are received from, the streamers being towed by the lead-in, and a connector device of the second aspect series connected in the lead-in, the body member of the connector device being mechanically coupled between respective portions of the load-bearing outer sheath of the lead-in on either side thereof, to transmit towing forces therebetween.

IP other features of the invention are set out in the dependent claims.

The invention will now be described, by way of example only, with reference to the accompanying drawings, of which:
Figure 1 is a schematic representation of a seismic survey vessel towing an array of seismic streamers in accordance with a first implementation of the invention;
Figure 2 is a somewhat schematic, part-sectional representation of part of a connector device used in forming the array of Figure 1;
Figure 3 is a schematic representation of the connector device of Figure 2;
Figure 4 is a more detailed perspective view of some of the principal mechanical components of the body member of an alternative embodiment of the connector device of Figures 2 and 3;
Figure 5 is an enlarged perspective view of one of the components illustrated in Figure 4;
Figures 6 and 7 are respective perspective views of a towing attachment for fitment to the body member of Figure 4, and of the towing attachment actually fitted to the body member of Figure 4; and
Figure 8 is a schematic representation of a further embodiment of a seismic streamer array in accordance with the present invention.

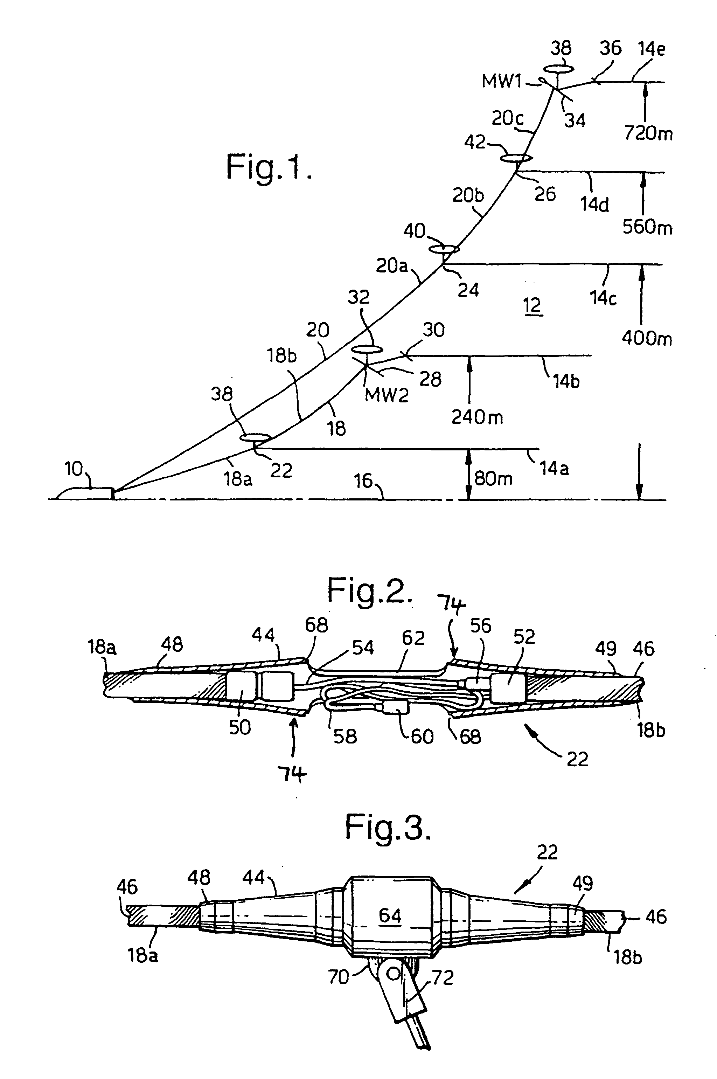

The seismic survey vessel of Figure 1 is indicated at 10, and is shown towing an array 12 of seismic streamers 14. Although the array contains ten of the streamers 14, symmetrically distributed five on each side of the centre line 16 of the vessel 10, only the five streamers on the starboard side of the vessel are shown in Figure 1 for the sake of simplicity: It will be appreciated that the arrangement of the five streamers on the port side of the vessel is an exact mirror image of the arrangement shown in Figure 1. The streamers 14 are uniformly spaced apart with a 160 metre spacing, giving the array 12 an overall width of 1440 metres, and are each typically 4000 metres long.

As is well known, each of the streamers 14 contains a large number of longitudinally distributed hydrophones, groups of which are interspersed with associated electronics modules. Additionally, each streamer 14 is also provided with longitudinally distributed depth-controlling devices known as "birds" and acoustic position sensing devices. Further, the forward ends of the streamers 14 include so-called "stretch" sections for noise reduction. Since none of these is directly relevant to the present invention, and thus can take any convenient form, they are not shown in Figure 1, nor will they be described in any further detail.

In accordance with the present invention, the two inner streamers 14a and 14b are towed by means of a single lead-in 18 common to both of them, while the three outer streamers 14c, 14d and 14e are towed by a single lead-in 20 common to all three of them. To facilitate this, the lead-in 18 is provided, intermediate its ends, with a connector device 22 to which the streamer 14a is connected, while the lead-in 20 is provided, intermediate its ends, with two spaced connector devices 24, 26 to which the streamers 14c and 14d respectively are connected. The connector devices 22, 24, 26 are all basically similar, and one of them will be described in more detail hereinafter.

The lateral distance between the centre-line 16 of the vessel 10 and the end of the lead-in 18 remote from the vessel is controlled by a MONOWING deflector 28 and auxiliary deflector wing 30 of the types described in US Patent No 5,357,892, the deflector 28 being suspended at the desired depth beneath the surface of the water from a float 32, as also described in US Patent No 5,357,892. Similarly, the lateral distance between the centre-line 16 of the vessel 10 and the end of the lead-in 20 remote from the vessel is controlled by a MONOWING deflector 34 and its auxiliary deflector wing 36, the deflector 34 being suspended from a float 38.

In dependence upon the weight of the lead-ins 18,20, they may be supported at the desired depth beneath the surface of the water from respective floats 38, 40, 42. Although these floats are shown for simplicity as being coupled to the connector devices, they would in practice be located in between the connector devices, to avoid coupling movements due to surface waves to the connector devices.

The desired streamer spacing of 160 metres is determined by the selection of the respective lengths of the lead-ins 18 and 20 and the respective positions of the connector devices 22, 24, 26 along them.

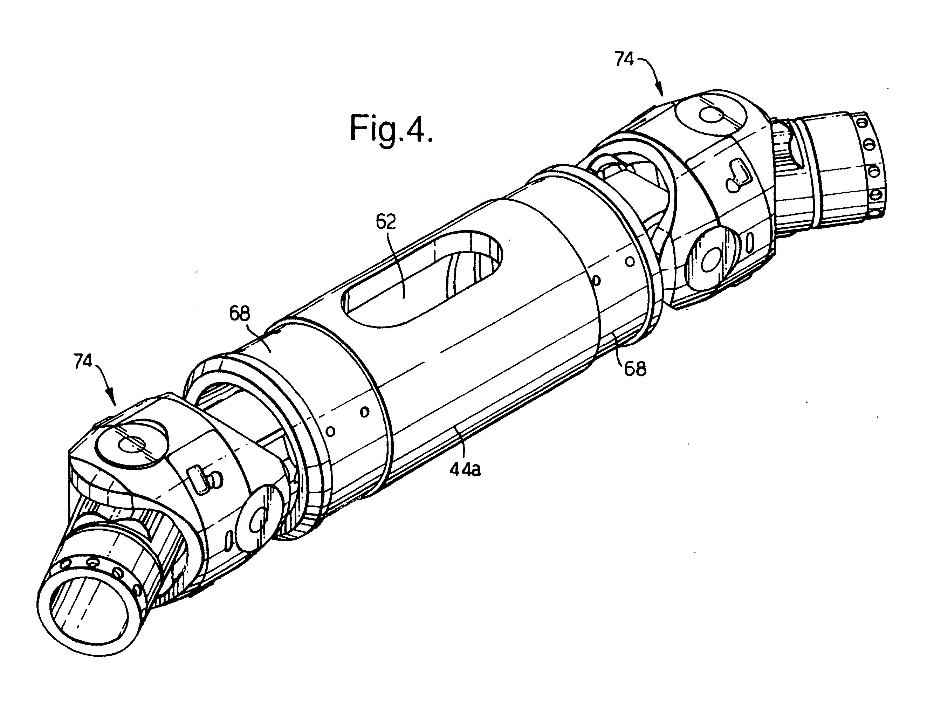

The connector device 22 is shown in Figures 2 and 3, and comprises an elongate generally tubular body member 44, which is adapted to be coaxially connected between two separate parts 18a and 18b of the lead-in 18. As is conventional, the lead-in 18 comprises an armoured outer sheath 46 composed of layers of woven steel wire, surrounding an inner core comprising electrical conductors for conducting electrical power and control signals to the streamers 14a and 14b, and for receiving data signals from those streamers. The opposite ends 48, 49 of the body member 44, which is typically made of stainless steel or titanium, are sealingly secured around the outside of the outer sheath 46 using cone-shaped armour clamps or resin sockets in known manner, while the respective ends of the parts 18a and 18b within the body member 44 are terminated in respective watertight cable terminations 50, 52.

Within the cable termination 50, the core conductors are connected to a short flexible jumper cable 54, which terminates in a connector 56. The connector 56 plugs into the cable termination 52, to provide connection between those inner core conductors of the lead-in part 18a which are associated with the streamer 14b. Additionally, the connector 56 is provided with a long flexible jumper cable 58, which terminates in a connector 60. The connector 60 plugs into a watertight cable termination (not shown) associated with the streamer 14a, to provide connection between those inner core conductors of the lead-in part 18a which are associated with the streamer 14a. The central portion of the body member 44 is provided with one or more slots 62, through one of which the jumper cable 58 and its connector 60 are passed en route to connection to the streamer 14a. The jumper cable 58 is folded up in the interior of the body member when the connector device 22 is stored, as will become apparent hereinafter.
As an alternative to the arrangement of the preceding paragraph, the short and long flexible jumper cables 54, 58 can both be connected to the relevant core conductors within the cable termination 50. In a still further alternative, the jumper cables 54, 58 can be replaced by a Y-shaped cable having the connectors 56 and 58 at the ends of the two prongs of the Y-shape, and a connector at the base of the Y-shape which co-operates with a connector in the termination 50.

It will be appreciated from the description of the preceding two paragraphs that the lead-in part 18a contains more core conductors than the lead-in part 18b, in that the former includes core conductors associated with both of the streamers 14a and 14b: in practice, typically only the conductors for data signals are duplicated. This has the result that the lead-in part 18a is slightly larger in diameter than the lead-in part 14b, but the difference is fairly small and the increase in drag due to the increased diameter is also fairly small.

As shown in Figure 3, the connector device 22 further comprises a towing attachment based upon a hollow clamping member 64. The clamping member 64 is detachably secured around the central portion of the tubular body member 44 containing the slots 62, and is split parallel to the plane of Figure 3 into two halves to facilitate its attachment to and removal from the body member 44.

The opposite open ends of the clamping member 64 are rotatably supported in circumferential tracks 68 formed around the central portion of the body member 44, so that the clamping member can rotate to some extent around the body member: however, this rotation capability is not essential, as will become apparent hereinafter. Additionally, a lug 70 projects radially from one side of the clamping member 64, and a towing bracket 72 is pivotally connected to this lug so as to pivot about axis perpendicular to the axis of the clamping member (ie it pivots about an axis which is substantially vertical in use). It will be appreciated that the streamer 14a is mechanically coupled to the towing bracket 72.

In use, the lead-ins 18 and 20 are initially stored on respective large storage drums (not shown) on the vessel 10, along with the tubular body members 44 of their respective connector devices 22 (for the streamer 18) and 24, 26 (for the streamer 20) and possibly their respective outer streamers 14b and 14e, while the streamers 14a, 14c and 14d, not yet connected to the connector devices 22, are also stored on respective drums on the vessel. At this point, the jumper cables 58 of each of the connector devices 22, 24, 26 are folded up inside the body member 44 of their respective connector devices, as mentioned earlier.

To facilitate the storage of the lead-ins 18,20 on storage drums having a diameter as low as 2 metres without removing the tubular body members 44, the latter can be provided with at least one, and preferably two, universal joints, to give them a limited amount of flexibility. An alternative embodiment of the connector device 22, incorporating such universal joints, will now be described in more detail with reference to Figures 4 to 7.

Figure 4 shows, at 44a, the central portion of the tubular body member 44 of the connector device 22 (ie the portion which contains the slots 62 and to which the clamping member 64 is detachably secured), together with the aforementioned universal joints, indicated at 74, by which the central portion 44a is connected to respective end portions loosely equivalent to the end portions 48 and 49 shown in Figures 2 and 3.

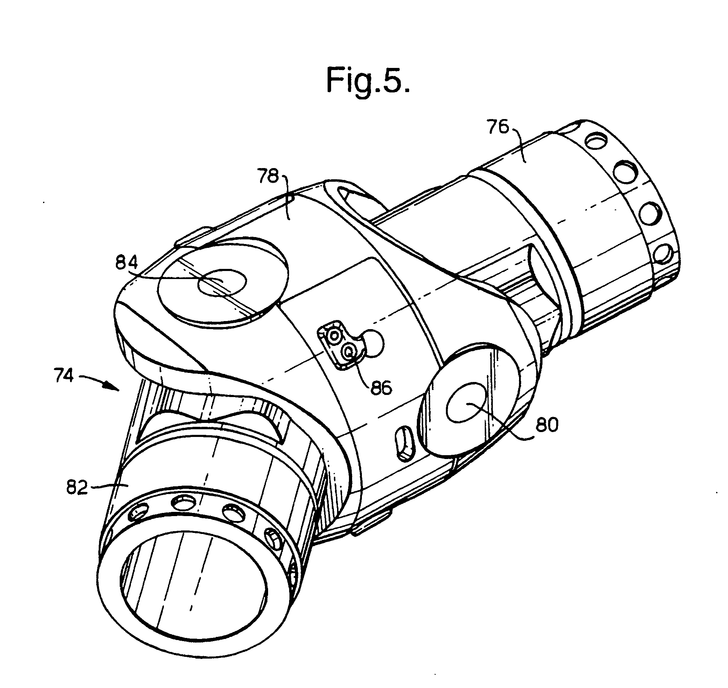

An enlarged view of one of the universal joints 74 is provided by Figure 5, where it can be seen that the universal joint is of the Cardan type, and comprises a first short tubular piece 76, of which one end is adapted to be secured within one open end of the central portion 44a of the body member 44, and the other end is pivotally secured within one open end of a hollow two-part universal joint housing 78 by means of a pin 80 extending through the housing and diametrically of the piece 76. A second short tubular piece 82 has one end similarly pivotally secured within the other open end of the hollow housing 78 by means of a pin 84 extending at right angles to the pin 80, and its other end adapted to be secured within the open end of one of the end portions 48 or 49 of the body member 44. Set screws 86 pass through the housing 78 into engagement with respective ones of the pins 80, 84 to secure the pins in the housing and ensure that the pins hold the two pieces of the housing together.

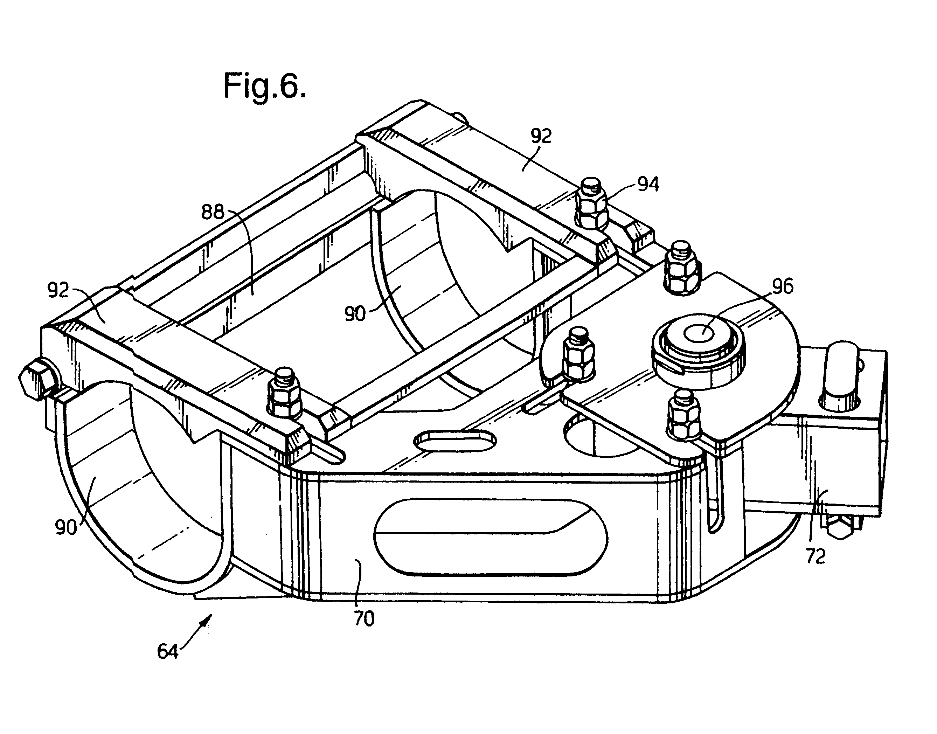

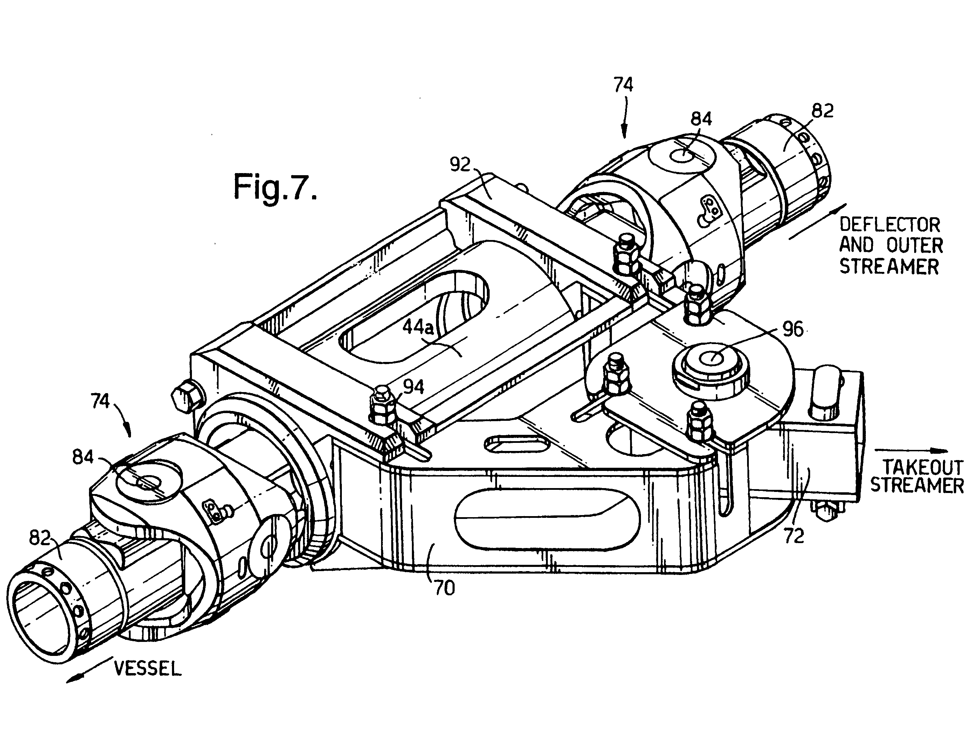

Figure 6 shows the towing attachment based on the clamping member 64 in more detail, while Figure 7 shows the clamping member 64 secured to the central portion 44a of the tubular body member 44. As can best be seen in Figure 6, the clamping member 64 comprises a frame 88 defining a U-shaped channel member 90 for receiving the central portion 44a of the tubular body member 44. The frame 88 is provided with a clamping device 92 which pivots about an axis extending parallel to the axis of the portion 44a to close the U-shaped channel 90 and clamp the portion 44a therein, as shown in Figure 7. The clamping device 92 is held in its closed position by lock-nuts 94, and is held sufficiently tightly to prevent rotation about the body member 44.

The lug 70 is generally triangular, hollow, and projects from one side of the frame 88, while the towing bracket 72 is pivotally connected to the lug 70 by means of a pin 96 extending between and secured to the upper and lower surfaces of the lug.

In operation, when it is desired to begin the seismic survey, the port and starboard outer streamers 14e are deployed over the stem of the vessel 10, and birds and position sensing devices are connected to them as appropriate in the usual way during deployment. As deployment proceeds, eventually the ends of the lead-ins 20 reach the stem of the vessel 10, whereupon the MONOWING deflectors 34 and their associated auxiliary deflector wings and floats are attached, again in the usual way, and deployment again continues. Simultaneously, deployment of the port and starboard streamers 14d commences.

When the tubular body members 44 of the connectors 26 of the lead-ins 20 reach the stem of the vessel 10, their towing attachments are attached, but deployment of the lead-ins 20 stops until the front ends of the streamers 14d reach the stem, whereupon these front ends are transferred by means of a transfer cable and connected to the connectors 26. Suitable drag-reducing fairings are then fitted over the connectors 26, and deployment continues yet again. Simultaneously, deployment of the port and starboard streamers 14c commences.

When the tubular body members 44 of the connectors 24 of the lead-ins 20 reach the stem of the vessel 10, their towing attachments are attached, but again, deployment of the lead-ins 20 stops until the front ends of the streamers 14c reach the stem of the vessel 10. At this point, the front ends of the streamers 14c are connected to the connectors 24 using a transfer cable as described above, suitable fairings are fitted to the connectors, and deployment continues until the lead-ins 20 and the streamers 14c, 14d and 14e are fully deployed.

An analogous procedure is then followed to deploy the lead-ins 18 and the streamers 14a and 14b, whereupon the array 12 is fully deployed.

Drag reducing fairings are also fitted to the lead-ins 18, 20 during their deployment.

Once the fully deployed array 12 has been set up by means of the MONOWING deflectors 28, 34 to have the required 160 metre streamer spacing, and airguns or other seismic sources have also been deployed, the survey commences and is carried out as described hereinbefore. After the survey is completed, the recovery of the seismic sources and the array 12 is carried out by effectively reversing the deployment sequence described in the preceding paragraphs.

The Applicant has determined that, as a result of towing more than one streamer from each lead-in in accordance with the present invention, the drag produced by the streamer array 12 is about 50 tonnes, which is a marked improvement on the over 70 tonnes drag that would be produced if each of the ten streamers were towed by a respective lead-in.

Many changes can be made to the described implementation of the invention.

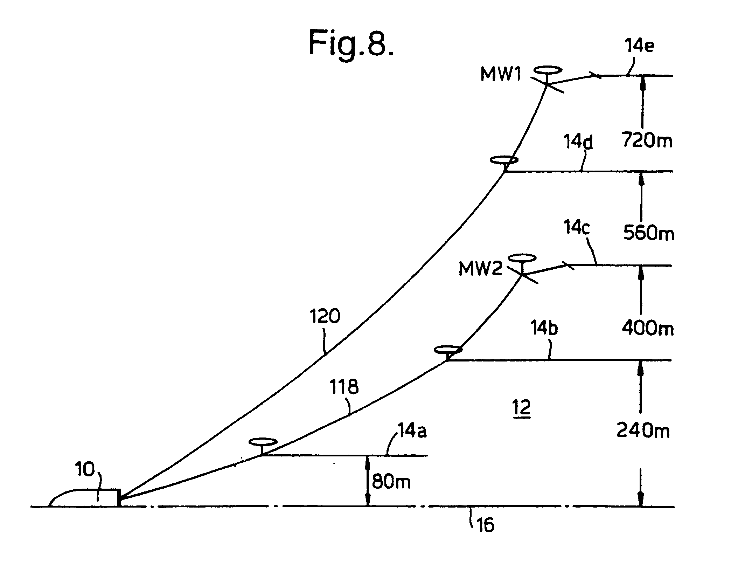

For example, as shown in Figure 8, the three inner streamers 14a, 14b, 14c can be connected to a single common lead-in 118, while the two outer streamers 14d, 14e can be connected to a single common lead-in 120.

Other changes which can be made include making the outer sheath 46 of the lead-ins 18, 20, 118, 120 from a high strength synthetic fibre such as Kevlar, in which case, because of the light weight of the Kevlar compared to steel, the floats 38, 40, 42 are unnecessary, and the aforementioned resin sockets are used to connect the sheath to the relevant connector device.

Also, at least some of the electrical conductors of the inner core, specifically those which carry control and signals data to and from the streamers 14, can be replaced with optical fibres, in which case the jumper cables 54, 58 (or their alternatives) also contain optical fibres, and the associated connectors are hybrid electro-optical connectors.

Additionally, the connectors 22, 24, 26 can include multiplexers for multiplexing the data signals from the streamers 14, in order to obviate the need for extra conductors in the parts of the lead-ins on the vessel-side of the connectors.

A particularly advantageous modification which can be made to the connector devices 22, 24, 26 comprises incorporating in the portion 49 of the tubular body member 44 of the connector device, ie on the side thereof associated with the outer lead-in part (part 18b for the connector device 22, part 20b for the connector device 24 and part 20c for the connector device 26), a screw connector for detachably connecting the outer lead-in part to the connector device. This permits outer lead-in parts of different lengths to be used to achieve different lateral streamer spacings, as desired. A similar screw connector can be included in portion 48 of the tubular body member 44 of the connector device if desired.

Although the preferred embodiment of the connector device 22 has two spaced apart universal joints to provide it with a certain degree of flexibility, in some applications, a single universal joint may be sufficient to provide the necessary flexibility, eg where the storage drums are not quite so small in diameter.

Finally, although the invention has been described in the context of a connector device for permitting two or more streamers to be towed from a single lead-in, a modified version of the connector device, in which the towing attachment based on the clamping device 64 and the towing bracket 72 is simply omitted, can be used to splice together two substantially identical lead-ins to produce a lead-in of increased length. This modified version of the connector device includes one or two universal joints as necessary, and is particularly useful for connecting together undamaged parts cut or otherwise derived from a damaged lead-in which would otherwise be unusable.

## Claims

1. A method of performing a marine seismic survey with an array of seismic streamers (14a-14e) towed behind a survey vessel (10), **characterised in that** two or more of the streamers (14a, 14b; 14c-14e) towed from a single lead-in (18; 20) which comprises a load-bearing outer sheath (46) to bear the towing forces, an electrical or electro-optical core via which control signals and electrical power are supplied to, and data signals are received from, the streamers (14a, 14b; 14c-14e) being towed by the lead-in (18; 20), and a connector device (22; 24, 26) series connected in the lead-in (18; 20), the connector device comprising a body member (44) mechanically coupled between respective portions of the load-bearing outer sheath (46) of the lead-in on (18; 20) either side thereof, to transmit towing forces therebetween, and a towing attachment (70, 72) for mechanical connection to one of the two or more streamers.

2. A method as claimed in claim 1, wherein the array comprises 2N streamers, where N is at least 2, the streamers are substantially uniformly spaced apart and symmetrically distributed on each side of the centre line of the vessel (10), and at least two streamers on each side of the centre line of the vessel are towed from a respective such lead-in.

3. A connector device **characterised by** being adapted for series connection in a lead-in (18; 20) to permit the lead-in (18; 20) to tow at least two seismic streamers (14a, 14b; 14c-14e), the lead-in comprising a load-bearing outer sheath (46), to bear the towing forces, and an electrical or electro-optical core via which control signals and electrical power are supplied to, and data signals are received from, the streamers (14a-14e), the connector device (22, 24, 26) comprising a body member (44) adapted to be mechanically coupled between respective portions of the load-bearing outer sheath of the lead-in (18; 20) on either side of the body member (44), to transmit towing forces therebetween, and a towing attachment (70, 72) for mechanical connection to one of the two or more streamers (14a-14e), said towing attachment (70, 72) being secured to the body member (44).

4. A connector device as claimed in claim 3, wherein the body member comprises at least two generally tubular portions interconnected by a universal joint, the towing attachment being secured to one of the tubular body portions.

5. A connector device as claimed in claim 3, wherein the body member comprises three tubular body portions interconnected by two universal joints, the towing attachment being secured to the middle one of tubular body portions.

6. A connector device as claimed in any one of claims 3 to 5, wherein the towing attachment comprises clamping means for detachably clamping it to the body member.

7. A connector device as claimed in any one of claims 3 to 6, wherein the towing attachment has a towing bracket pivotally connected to it, said towing bracket being pivotal about an axis generally perpendicular to the axis of the body member.

8. A connector device as claimed in any one of claims 3 to 7, wherein the or each universal joint is a Cardan-type universal joint.

9. A connector device as claimed in any one of claims 3 to 8, wherein at least part of the body member is made from titanium.

10. An array of seismic streamers adapted to be towed behind a survey vessel (10), the array being **characterised by** comprising at least one lead-in (18; 20) which has two or more of the streamers (14a-14e) connected to be towed thereby, and which comprises a load-bearing outer sheath (46) to bear the towing forces, an electrical or electro-optical core via which control signals and electrical power are supplied to, and data signals are received from, the streamers being towed by the lead-in (18; 20), and a connector device as defined in any one of claims series connected in the lead-in, the body member of the connector device being mechanically coupled between respective portions of the load-bearing outer sheath of the lead-in (18; 20) on either side thereof, to transmit towing forces therebetween.

11. An array as claimed in claim 10, comprising 2N streamers, where N is at least 2, the streamers are substantially uniformly spaced apart and symmetrically distributed on each side ofthe centre line of the vessel, and at least two streamers on each side of the centre line of the vessel are towed from a respective such lead-in.

12. An array as claimed in claim 10 or claim 11, wherein the load-bearing outer sheath of the or each such lead-in is made from high strength synthetic fibres.

13. An array as claimed in claim 12, wherein the high strength synthetic fibres are Kevlar fibres.

14. An array as claimed in any one of claims 10 to 13, wherein the body member of the or each connector device comprises at least two generally tubular portions interconnected by a universal joint, the towing attachment being secured to one of the tubular body portions.

15. An array as claimed in any one of claims 10 to 13, wherein the body member of the or each connector device comprises three tubular body portions interconnected by two universal joints, the towing attachment being secured to the middle one of tubular body portions.

16. An array as claimed in any one of claims 10 to 15, wherein the towing attachment of the or each connector device comprises clamping means for detachably clamping it to the tubular body portion to which it is secured.

17. An array as claimed in any one of claims 10 to 16, wherein the towing attachment of the or each connector device has a towing bracket pivotally connected to it, said towing bracket being pivotal about an axis generally perpendicular to the axis of the body portion to which the towing attachment is secured.

18. An array as claimed in any one of claims 10 to 17, wherein the or each universal joint of the or each connector device is a Cardan-type universal joint.

19. An array as claimed in any one of claims 10 to 18, wherein at least part of the body member of the or each connector device is made from titanium.

20. An array as claimed in any one of claims 10 to 19, wherein the inner core of the lead-in at each end of the or each connector device is terminated in a respective watertight termination, and the connector device includes elongate flexible electrical or electro-optical connector means for establishing electrical or electro-optical connection between said watertight terminations and between one of said terminations and the streamer connected to the towing attachment.

21. An array as claimed in claim 20, wherein the or each watertight termination includes an electrical or electro-optical connector, and said elongate flexible connector means is adapted to connect to an disconnect from the respective one of said connectors.

22. An array as claimed in any one of claims 10 to 21, wherein the inner core of the part of the single lead-in on the vessel side of each connector includes separate electrical conductors or optical fibres for the control and data signals of each streamer connected directly or indirectly to that part via that connector.

## Patentansprüche

1. Verfahren zur Durchführung einer seeseismischen Untersuchung mit einer Anordnung von seismischen Streamern (14a-14e), die hinter einem Untersuchungsschiff (10) geschleppt werden, **dadurch gekennzeichnet, daß** zwei oder mehr Streamer (14a, 14b; 14c-14e) aus einer einzelnen Zuführung (18; 20) geschleppt werden, die aufweist: eine tragende Außenhülle (46), um die Schleppkräfte auszuhalten; einen elektrischen oder elektrooptischen Kern, mittels dem Steuersignale und elektrischer Strom den Streamem (14a, 14b; 14c-14e), die durch die Zuführung (18; 20) geschleppt werden, zugeführt werden, und von denen Datensignale empfangen werden; und eine Verbindungsvorrichtung (22; 24, 26), die in der Zuführung (18; 20) in Reihe angeschlossen ist, wobei die Verbindungsvorrichtung aufweist: ein Körperelement (44), das mechanisch zwischen entsprechenden Abschnitten der tragenden Außenhülle (46) der Zuführung (18; 20) auf beiden Seiten davon gekoppelt ist, um Schleppkräfte dazwischen zu übertragen; und eine Schleppbefestigungseinrichtung (70, 72) für eine mechanische Verbindung mit dem einen der zwei oder mehreren Streamer.

2. Verfahren nach Anspruch 1, bei dem die Anordnung 2N Streamer aufweist, worin N mindestens 2 beträgt, wobei die Streamer im wesentlichen gleichmäßig beabstandet und symmetrisch auf jeder Seite der Mittellinie des Schiffes (10) verteilt sind, und wobei mindestens zwei Streamer auf jeder Seite der Mittellinie des Schiffes von einer entsprechenden derartigen Zuführung geschleppt werden.

3. Verbindungsvorrichtung, **dadurch gekennzeichnet, daß** sie für einen Reihenanschluss in einer Zuführung (18; 20) angepaßt ist, damit die Zuführung (18; 20) mindestens zwei seismische Streamer (14a, 14b; 14c-14e) schleppen kann, wobei die Zuführung eine tragende Außenhülle (46), um die Schleppkräfte auszuhalten, und einen elektrischen oder elektrooptischen Kern aufweist, mittels dem Steuersignale und elektrischer Strom den Streamem (14a-14e) zugeführt werden, und von denen Datensignale empfangen werden; wobei die Verbindungsvorrichtung (22; 24, 26) aufweist: ein Körperelement (44), das so ausgeführt ist, daß es mechanisch zwischen entsprechenden Abschnitten der tragenden Außenhülle der Zuführung (18; 20) auf beiden Seiten des Körperelementes (44) gekoppelt wird, um Schleppkräfte dazwischen zu übertragen; und eine Schleppbefestigungseinrichtung (70, 72) für eine mechanische Verbindung mit einem der zwei oder mehreren Streamer (14a-14e), wobei die Schleppbefestigungseinrichtung (70, 72) am Körperelement (44) gesichert wird.

4. Verbindungsvorrichtung nach Anspruch 3, bei der das Körperelement mindestens zwei im allgemeinen rohrförmige Abschnitte aufweist, die mittels eines Universalgelenkes miteinander verbunden sind, wobei die Schleppbefestigungseinrichtung an einem der rohrförmigen Körperabschnitte gesichert wird.

5. Verbindungsvorrichtung nach Anspruch 3, bei der das Körperelement drei rohrförmige Körperabschnitte aufweist, die mittels zwei Universalgelenken miteinander verbunden sind, wobei die Schleppbefestigungseinrichtung am mittleren der rohrförmigen Körperabschnitte gesichert wird.

6. Verbindungsvorrichtung nach einem der Ansprüche 3 bis 5, bei der die Schleppbefestigungseinrichtung eine Klemmeinrichtung für das lösbare Festklemmen am Körperelement aufweist.

7. Verbindungsvorrichtung nach einem der Ansprüche 3 bis 6, bei der die Schleppbefestigungseinrichtung eine Schlepphalterung aufweist, die gelenkig damit verbunden ist, wobei die Schlepphalterung gelenkig um eine Achse ist, die im allgemeinen senkrecht zur Achse des Körperelementes verläuft.

8. Verbindungsvorrichtung nach einem der Ansprüche 3 bis 7, bei der das oder jedes Universalgelenk ein Kardanuniversalgelenk ist.

9. Verbindungsvorrichtung nach einem der Ansprüche 3 bis 8, bei der mindestens ein Teil des Körperelementes aus Titan besteht.

10. Anordnung von seismischen Streamern, die so ausgeführt sind, daß sie hinter einem Untersuchungsschiff (10) geschleppt werden können, wobei die Anordnung so **gekennzeichnet** ist, daß sie mindestens eine Zuführung (18; 20) aufweist, die zwei oder mehr Streamer (14a-14e) aufweist, die verbunden sind, um dadurch geschleppt zu werden, und die aufweist: eine tragende Außenhülle (46), um die Schleppkräfte auszuhalten; einen elektrischen oder elektrooptischen Kern, mittels dem Steuersignale und elektrischer Strom den Streamern, die durch die Zuführung (18; 20) geschleppt werden, zugeführt werden, und von denen Datensignale empfangen werden; und eine Verbindungsvorrichtung, wie sie in einem der Ansprüche definiert wird, die in der Zuführung (18; 20) in Reihe angeschlossen ist, wobei das Körperelement der Verbindungsvorrichtung mechanisch zwischen entsprechenden Abschnitten der tragenden Außenhülle der Zuführung (18; 20) auf beiden Seiten davon gekoppelt ist, um Schleppkräfte dazwischen zu übertragen.

11. Anordnung nach Anspruch 10, die 2N Streamer aufweist, worin N mindestens 2 beträgt, wobei die Streamer im wesentlichen gleichmäßig beabstandet und symmetrisch auf jeder Seite der Mittellinie des Schiffes verteilt sind, und wobei mindestens zwei Streamer auf jeder Seite der Mittellinie des Schiffes von einer entsprechenden derartigen Zuführung geschleppt werden.

12. Anordnung nach Anspruch 10 oder Anspruch 11, bei der die tragende Außenhülle der oder einer jeden derartigen Zuführung aus synthetischen Fasern mit hoher Festigkeit besteht.

13. Anordnung nach Anspruch 12, bei der die synthetischen Fasern mit hoher Festigkeit Kevlar-Fasern sind.

14. Anordnung nach einem der Ansprüche 10 bis 13, bei der das Körperelement der oder einer jeden Verbindungsvorrichtung mindestens zwei im allgemeinen rohrförmige Abschnitte aufweist, die mittels eines Universalgelenkes verbunden sind, wobei die Schleppbefestigungseinrichtung an einem der rohrförmigen Körperabschnitte gesichert wird.

15. Anordnung nach einem der Ansprüche 10 bis 13, bei der das Körperelement der oder einer jeden Verbindungsvorrichtung drei rohrförmige Körperabschnitte aufweist, die mittels zwei Universalgelenken miteinander verbunden sind, wobei die Schleppbefestigungseinrichtung am mittleren der rohrförmigen Körperabschnitte gesichert wird.

16. Anordnung nach einem der Ansprüche 10 bis 15, bei der die Schleppbefestigungseinrichtung der oder einer jeden Verbindungsvorrichtung eine Klemmeinrichtung für das lösbare Festklemmen dieser am rohrförmigen Körperabschnitt aufweist, an dem sie gesichert wird.

17. Anordnung nach einem der Ansprüche 10 bis 16, bei der die Schleppbefestigungseinrichtung der oder einer jeden Verbindungsvorrichtung eine Schlepphalterung aufweist, die gelenkig damit verbunden ist, wobei die Schlepphalterung drehbar um eine Achse ist, die im allgemeinen senkrecht zur Achse des Körperabschnittes verläuft, an dem die Schleppbefestigungseinrichtung gesichert ist.

18. Anordnung nach einem der Ansprüche 10 bis 17, bei der das oder jedes Universalgelenk der oder einer jeden Verbindungsvorrichtung ein Kardanuniversalgelenk ist.

19. Anordnung nach einem der Ansprüche 10 bis 18, bei der mindestens ein Teil des Körperelementes der oder einer jeden Verbindungsvorrichtung aus Titan besteht.

20. Anordnung nach einem der Ansprüche 10 bis 19, bei der der innere Kern der Zuführung an jedem Ende der oder einer jeden Verbindungsvorrichtung in einem entsprechenden wasserdichten Abschluss endet und die Verbindungsvorrichtung eine längliche elastische elektrische oder elektrooptische Verbindungseinrichtung für das Bewirken einer elektrischen oder elektrooptischen Verbindung zwischen den wasserdichten Abschlüssen und zwischen einem der Abschlüsse und dem Streamer, der mit der Schleppbefestigungseinrichtung verbunden ist, umfaßt.

21. Anordnung nach Anspruch 20, bei der der oder jeder wasserdichte Abschluss einen elektrischen oder elektrooptischen Verbinder umfaßt und die längliche elastische Verbindungseinrichtung so ausgeführt ist, daß sie eine Verbindung mit und eine Trennung von dem entsprechenden der Verbinder bewirkt.

22. Anordnung nach einem der Ansprüche 10 bis 21, bei der der innere Kern des Teils der einzelnen Zuführung an der Schiffsseite eines jeden Verbinders separate elektrische Leiter oder optische Fasern für Steuer- und Datensignale eines jeden Streamers umfaßt, der direkt oder indirekt mit jenem Teil mittels jenes Verbinders verbunden ist.

## Revendications

1. Procédé d'exécution d'une prospection sismique marine par un ensemble de flûtes sismiques (140a-140e) remorquées derrière un navire hydrographique (10), **caractérisé en ce que** deux ou plusieurs des flûtes (14a, 14b; 14c-14e) sont remorquées à partir d'un seul câble d'entrée (18; 20) comprenant une gaine de support de charge externe (46) pour supporter les forces de remorquage, une âme électrique ou électro-optique assurant la transmission de signaux de commande et d'énergie électrique aux flûtes (14a, 14b; 14c-14e) remorquées par le câble d'entrée (18; 20) et la réception des signaux de données transmises par celles-ci, et un dispositif connecteur (22; 24, 26) connecté en série dans le câble d'entrée, le dispositif connecteur comprenant un élément de corps (44) couplé mécaniquement entre les parties respectives de la gaine de support de charge externe (46) du câble d'entrée (18; 20), de chaque côté correspondant, pour transmettre les forces de remorquage entre elles, et un crochet de remorquage (70, 72) destiné à être connecté de manière mécanique dans l'une des deux ou plusieurs flûtes.

2. Procédé selon la revendication 1, dans lequel l'ensemble comprend 2N flûtes, N correspondant au moins à 2, les flûtes étant espacées de manière pratiquement uniforme et réparties de manière symétrique de chaque côté de la ligne médiane du navire (10), au moins deux flûtes de chaque côté de la ligne médiane du navire étant remorquées à partir d'un tel câble d'entrée respectif.

3. Dispositif connecteur **caractérisé en ce qu'**il est destiné à une connexion en série dans un câble d'entrée (18; 20) pour permettre au câble d'entrée (18, 20) de remorquer au moins deux flûtes sismiques (14a, 14b; 14c-14e), le câble d'entrée comprenant une gaine de support de charge externe (46) destinée à supporter les forces de remorquage, et une âme électrique ou électro-optique assurant la transmission de signaux de commande et d'énergie électrique vers les flûtes (14a-14e) et la réception de signaux de données transmises par celles-ci, le dispositif connecteur (22, 24, 26) comprenant un élément de corps (44) destiné à être couplé mécaniquement entre des parties respectives de la gaine de support de charge externe du câble d'entrée (18, 20), de chaque côté de l'élément de corps (44), pour transmettre les forces de remorquage entre elles, et un crochet de remorquage (70, 72) destiné à être connecté à l'une des deux ou plusieurs flûtes (14a-14e), ledit crochet de remorquage (70, 72) étant fixé sur l'élément de corps (44).

4. Dispositif connecteur selon la revendication 3, dans lequel l'élément de corps comprend au moins deux parties généralement tubulaires interconnectées par un joint universel, le crochet de remorquage étant fixé sur l'une des parties de corps tubulaires.

5. Dispositif connecteur selon la revendication 3, dans lequel l'élément de corps comprend trois parties de corps tubulaires interconnectées par deux joints universels, le crochet de remorquage étant fixé sur la partie médiane des parties de corps tubulaires.

6. Dispositif connecteur selon l'une quelconque des revendications 3 à 5, dans lequel le crochet de remorquage comprend un moyen de serrage destiné à son serrage amovible sur l'élément de corps.

7. Dispositif de connecteur selon l'une quelconque des revendications 3 à 6, dans lequel le crochet de remorquage comporte une console de remorquage qui y est connectée par pivotement, ladite console de remorquage pouvant pivoter autour d'un axe généralement perpendiculaire à l'axe de l'élément de corps.

8. Dispositif de connecteur selon l'une quelconque des revendications 3 à 7, dans lequel le ou chaque joint universel est un joint de cardan.

9. Dispositif de connecteur selon l'une quelconque des revendications 3 à 8, dans lequel au moins une partie de l'élément de corps est composée de titane.

10. Ensemble de flûtes sismiques destiné à être remorqué derrière un navire hydrographique (10), l'ensemble étant **caractérisé en ce qu'**il comprend au moins un câble d'entrée (18; 20) auquel sont connectées deux ou plusieurs flûtes (14a-14e) destinées à être remorquées et comprenant une gaine de support de charge externe (46), destinée à supporter les forces de remorquage, une âme électrique ou électro-optique assurant la transmission de signaux de commande et d'énergie électrique vers les flûtes remorquées par le câble d'entrée (18; 20) et la réception des signaux transmises par celles-ci, et un dispositif connecteur selon l'une quelconque des revendications, connecté en série dans le câble d'entrée, l'élément de corps du dispositif connecteur étant couplé mécaniquement entre des parties respectives de la gaine de support de charge externe du câble d'entrée (18; 20), de chaque côté correspondant, pour transmettre les forces de remorquage entre elles.

11. Ensemble selon la revendication 10, dans lequel l'ensemble comprend 2N flûtes, N correspondant au moins à 2, les flûtes étant espacées de manière pratiquement uniforme et réparties de manière symétrique de chaque côté de la ligne médiane du navire (10), au moins deux flûtes de chaque côté de la ligne médiane du navire étant remorquées à partir d'un tel câble d'entrée respectif.

12. Ensemble selon les revendications 10 ou 11, dans lequel la gaine de support de charge externe du câble d'entrée ou de chaque câble d'entrée est composée de fibres synthétiques hautement résistantes.

13. Ensemble selon la revendication 12, dans lequel les fibres synthétiques hautement résistantes sont des fibres de Kevlar.

14. Ensemble selon l'une quelconque des revendications 10 à 13, dans lequel l'élément de corps du ou de chaque dispositif connecteur comprend au moins deux parties généralement tubulaires interconnectées par un joint universel, le crochet de remorquage étant fixé sur l'une des parties de corps tubulaires.

15. Ensemble selon l'une quelconque des revendications 10 à 13, dans lequel l'élément de corps du ou de chaque dispositif connecteur comprend trois parties de corps tubulaires interconnectées par deux joints universels, le crochet de remorquage étant fixé sur la partie médiane des parties de corps tubulaires.

16. Ensemble selon l'une quelconque des revendications 10 à 15, dans lequel crochet de remorquage du ou de chaque dispositif connecteur comprend un moyen de serrage destiné à son serrage amovible sur la partie tubulaire du corps sur laquelle il est fixé.

17. Ensemble selon l'une quelconque des revendications 10 à 16, dans lequel le crochet de remorquage du ou de chaque dispositif connecteur comporte une console de remorquage qui y est connectée par pivotement, ladite console de remorquage pouvant pivoter autour d'un axe généralement perpendiculaire à l'axe de l'élément de corps sur laquelle le crochet de remorquage est fixé.

18. Ensemble selon l'une quelconque des revendications 10 à 17, dans lequel le ou chaque joint universel du ou de chaque dispositif de connecteur est un joint de cardan.

19. Ensemble selon l'une quelconque des revendications 10 à 18, dans lequel au moins une partie de l'élément de corps du ou de chaque dispositif connecteur est composée de titane.

20. Ensemble selon l'une quelconque des revendications 16 à 19, dans lequel l'âme interne du câblé d'entrée, au niveau de chaque extrémité du ou de chaque dispositif connecteur, est raccordée dans un raccordement étanche à l'eau respectif, le dispositif connecteur englobant un moyen connecteur électrique ou électro-optique allongé flexible destiné à établir une connexion électrique ou électro-optique entre lesdits raccordements étanches à l'eau et entre l'un desdits raccordements et la flûte connectée au crochet de remorquage.

21. Ensemble selon la revendication 20, dans lequel le ou chaque raccordement étanche à l'eau englobe un connecteur électrique ou électro-optique, ledit moyen connecteur allongé flexible étant destiné à être connecté à l'un des connecteurs respectifs et à être déconnecté de celui-ci.

22. Ensemble selon l'une quelconque des revendications 10 à 21, dans lequel l'âme interne de la partie du seul câblé d'entrée sur le côté du navire de chaque connecteur englobe des conducteurs électriques séparés ou des fibres optiques pour transmettre les signaux de commande et de données transmis par chaque flûte connectée directement ou indirectement sur cette partie par l'intermédiaire de ce connecteur.
